# EUROPEAN PATENT APPLICATION

(11) **EP 3 070 375 A1**
(43) Date of publication of application: **21.09.2016**
(21) Application number: 16158483.4
(22) Date of filing: 03.03.2016
(51) Int. Cl.: F16H 61/04, F16H 63/50

(54) **CONTROL APPARATUS FOR VEHICLE**

(30) Priority: 03.03.2015 JP 2015041152
(71) Applicant: Toyota Jidosha Kabushiki Kaisha, Toyota-shi, Aichi-ken 471-8571 (JP)
(72) Inventor: OTSUBO, Masaaki, TOYOTA-SHI, AICHI-KEN (JP)
(74) Representative: Intès, Didier Gérard André

(57) **Abstract**

A control apparatus (6) for a vehicle executes a first mode of calculating an engine torque demand Dt based on a difference NT - NE between a target engine speed NT and an engine speed NE and operating an engine (1) based on the engine torque demand Dt, when a gear stage of a manual transmission (4) is changed, and executes a second mode of calculating an engine torque demand Dt less than that in the first mode based on NT - NE and operating the engine (1) based on the engine torque demand Dt, when the absolute value of NT - NE is less than a predetermined value γ and NIV ratio is stable.

## Description

### BACKGROUND OF THE INVENTION

### 1. Field of the Invention

The invention relates to a control apparatus for a vehicle, and particularly, relates to a control apparatus for a vehicle in which an output shaft of an engine is connected with an input shaft of a manual transmission through a clutch.

### 2. Description of Related Art

Japanese Patent Application Publication No. 2014-58909 discloses a method of determining that the gear stage of a manual transmission has changed when the absolute value of the difference between a smoothed value obtained by a smoothing process for a detection value of the input shaft speed of a manual transmission and a rough value with no smoothing process has increased after the opening of a clutch. When the change in the gear stage of the manual transmission is detected, a target engine speed is set to a value that depends on the input shaft speed of the manual transmission, and a gear-change revolution synchronization control for synchronizing the engine speed with the input shaft speed of the manual transmission based on the target engine speed is executed.

In JP 2014-58909 A, when it is determined that the gear stage of the manual transmission has been altered, the gear-change revolution synchronization control is started, and when the difference between the engine speed and the input shaft speed becomes less than a predetermined value, the gear-change revolution synchronization control is terminated.

### SUMMARY OF THE INVENTION

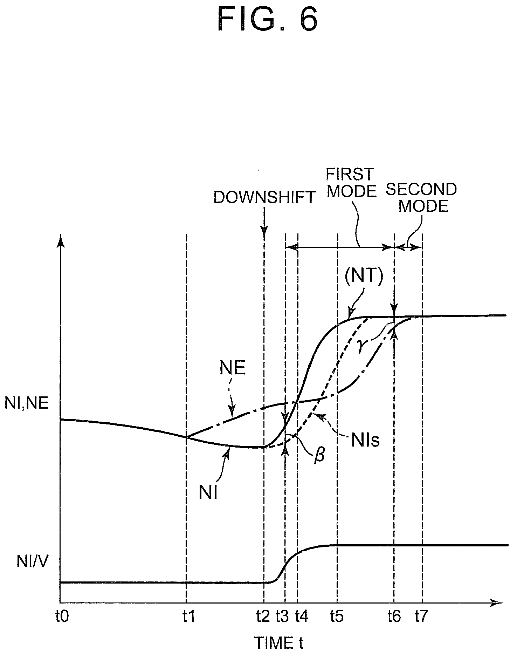

However, for example, when a driver steps on a clutch pedal and operates a shift lever in downshift operation, the engine speed sometimes becomes higher than the input shaft speed, if the release of an accelerator pedal is delayed (see FIG. 6). In such a case, if the difference between the engine speed and the input shaft speed of the manual transmission becomes less than the predetermined value before the input shaft speed increases for a gear stage after the gear change, the gear-change revolution synchronization control is terminated. Even after the gear-change revolution synchronization control is terminated, the input shaft speed increases to the input shaft speed for the gear stage after the gear change, and the divergence between the engine speed and the input shaft speed of the manual transmission becomes large. Therefore, there is a high possibility that a shock is generated when the driver releases the clutch pedal.

Hence, the invention provides a control apparatus for a vehicle that makes it possible to prevent the gear-change revolution synchronization control at the time of the gear shift of the manual transmission from terminating before the input shaft speed of the manual transmission increases to an input shaft speed for a gear stage after the gear change.

A control apparatus for a vehicle according to an aspect of the invention is a control apparatus for a vehicle in which an output shaft of an engine is connected with an input shaft of a manual transmission through a clutch, and which includes a gear shift detection unit that detects a gear shift of the manual transmission based on a change in input shaft speed of the manual transmission during opening of the clutch, and an engine control unit that starts a gear-change revolution synchronization control by which engine speed is controlled such that the engine speed becomes a target engine speed set depending on the input shaft speed, when the gear shift of the manual transmission is detected by the gear shift detection unit, and that finishes the gear-change revolution synchronization control, after determining that a difference between the engine speed and the input shaft speed is less than a predetermined range of values and that a change in ratio between the input shaft speed and vehicle speed during a predetermined time period is within a predetermined range. The aspect of the invention can be defined as follows. The aspect of the invention is a control apparatus for a vehicle, the vehicle configured such that an output shaft of an engine is connected with an input shaft of a manual transmission through a clutch, the control apparatus including an electronic control unit configured to (a) detect a gear shift of the manual transmission, based on a change in input shaft speed of the manual transmission during opening of the clutch, (b) start a gear-change revolution synchronization control by which engine speed is controlled such that the engine speed becomes a target engine speed set depending on the input shaft speed, when the gear shift of the manual transmission is detected, and (c) finish the gear-change revolution synchronization control, after determining that a difference between the engine speed and the input shaft speed is less than a predetermined range of values and that a change in ratio between the input shaft speed and vehicle speed during a predetermined time period is in a predetermined range.

Therefore, even if the difference between the engine speed and the input shaft speed becomes less than the predetermined range when the release of an accelerator pedal is delayed, the gear-change revolution synchronization control is not terminated when the change in the ratio between the input shaft speed and the vehicle speed during the predetermined time period is not in the predetermined range. Accordingly, it is possible to prevent the gear-change revolution synchronization control at the time of the downshift of the manual transmission from terminating before the input shaft speed of the manual transmission increases to an input shaft speed for a gear stage after the gear change.

The engine control unit has a first mode of calculating an engine torque demand based on the difference between the target engine speed and the engine speed, and a second mode of calculating an engine torque demand that is less in absolute value than the engine torque demand in the first mode, based on the difference between the target engine speed and the engine speed. The engine control unit executes the first mode, in response to the detection of a change in a gear stage of the manual transmission by the gear shift detection unit, and the engine control unit stops the execution of the first mode and executes the second mode, after determining that the difference between the engine speed and the input shaft speed is less than the predetermined range of values, and that the change in the ratio between the input shaft speed and the vehicle speed during the predetermined time period is in the predetermined range. In this case, it is possible to reduce the overshoot of the engine speed.

The gear shift detection unit determines that the gear stage of the manual transmission has changed, in a case where the absolute value of a difference between a smoothed value and a rough value has increased after the opening of the clutch, the smoothed value being a value that is obtained by a first smoothing process for a detection value of the input shaft speed, the rough value being either a value that is obtained by a second smoothing process for the detection value of the input shaft speed, or the detection value of the input shaft speed, the smoothing degree in the second smoothing process being less than the smoothing degree in the first smoothing process. In this case, it is possible to prevent the change in the gear stage of the manual transmission from being falsely detected based on the periodic rise and fall of the input shaft speed of the manual transmission that is generated at the time of the opening of the clutch.

The control apparatus for the vehicle according to the aspect of the invention finishes the gear-change revolution synchronization control, after determining that the difference between the engine speed and the input shaft speed is less than the predetermined range of values, and that the change in the ratio between the input shaft speed and the vehicle speed during the predetermined time period is in the predetermined range. Therefore, it is possible to prevent the gear-change revolution synchronization control at the time of the downshift of the manual transmission from terminating before the input shaft speed of the manual transmission increases to an input shaft speed for a gear stage after the gear change.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram showing a principal part of a vehicle according to an embodiment of the invention;
FIG. 2 is a block diagram showing a configuration of a control apparatus shown in FIG. 1;
FIG. 3 is a flowchart showing the behavior of a gear shift detection unit shown in FIG. 2;
FIG. 4 is a flowchart showing the behavior of an engine control unit shown in FIG. 2;
FIG. 5 is a timing chart exemplifying a gear-change revolution synchronization control for the vehicle shown in FIG. 1 to FIG. 4; and
FIG. 6 is another timing chart exemplifying the gear-change revolution synchronization control for the vehicle shown in FIG. 1 to FIG. 4.

### DETAILED DESCRIPTION OF EMBODIMENTS

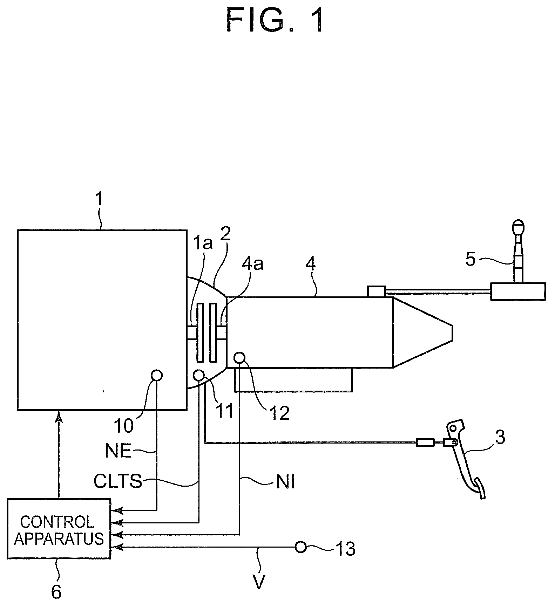

FIG. 1 is a block diagram showing a principal part of a vehicle according to an embodiment of the invention. In FIG. 1, the vehicle includes an engine 1, a clutch 2, a clutch pedal 3, a manual transmission 4, a shift lever 5, a control apparatus (ECU) 6, an engine speed sensor 10, a clutch position sensor 11, an input shaft speed sensor 12, and a vehicle speed sensor 13. The vehicle runs by the driving force that is output from the engine 1. The driving force generated by the engine 1 is transmitted to wheels (not illustrated) through the clutch 2, the manual transmission 4 and the like.

The engine 1, for example, is an internal combustion engine such as a gasoline engine or a diesel engine. The engine 1 includes multiple cylinders, a fuel injection apparatus to feed fuel to the cylinders, and a throttle valve to feed air to the cylinders (all are not illustrated). The fuel injection apparatus, based on a control signal from the control apparatus 6, injects an appropriate amount of fuel to the cylinders at an appropriate timing, or stops the injection of the fuel to the cylinders. The throttle valve, based on a control signal from the control apparatus 6, regulates the amount of the air to be fed to the cylinders. In the cylinders, the air-fuel mixture of the fuel and the air is formed. The formed air-fuel mixture is ignited and combusted by a spark plug that is actuated based on a control signal from the control apparatus 6. The combustion of the air-fuel mixture in the cylinders revolves an output shaft (crankshaft) 1a of the engine 1. The output shaft 1a of the engine 1 is connected with an input shaft 4a of the manual transmission 4 through the clutch 2.

The clutch 2 includes multiple (for example, two) friction plates that are alternately placed. When a driver steps on the clutch pedal 3, the multiple friction plates of the clutch 2 separate from each other, and interrupt the transmission of dynamic power between the output shaft 1a of the engine 1 and the input shaft 4a of the manual transmission 4. When the driver releases the clutch pedal 3, the multiple friction plates of the clutch 2 come into contact with each other, and dynamic power is transmitted between the output shaft 1a of the engine 1 and the input shaft 4a of the manual transmission 4.

The manual transmission 4 includes multiple gear stages that are different in change gear ratio. The multiple gear stages, for example, include first to fifth gear stages. The change gear ratio is the ratio between speed NI of the input shaft 4a and speed of an output shaft (not illustrated). The change gear ratio increases as the gear stage becomes a gear stage on the low-speed side (first-speed side), and the change gear ratio decreases as the gear stage becomes a gear stage on the high-speed side (fifth-speed side).

The shift lever 5 is provided so as to be operable along a shift gate. On the shift gate, positions corresponding to the multiple gear stages respectively are assigned. When the shift lever 5, by the driver, is operated so as to move to a position corresponding to one gear stage of the multiple gear stages (for example, a position corresponding to the first speed), the assigned gear stage (for example, the first speed) is selected in the manual transmission 4. Depending on the selected gear stage, the manual transmission 4 changes the speed of the output shaft 1a of the engine 1 to a desired speed, and performs the transmission to the wheels, for example, through a reduction gear.

The engine speed sensor 10 detects speed NE (rpm) of the output shaft 1a of the engine 1, and outputs a signal indicating the detection value, to the control apparatus 6. The clutch position sensor 11 detects a clutch position CLTS indicating the amount of separation between the multiple friction plates included in the clutch 2, and outputs a signal indicating the detection value, to the control apparatus 6. The input shaft speed sensor 12 detects the speed NI (rpm) of the input shaft 4a of the manual transmission 4, and outputs a signal indicating the detection value, to the control apparatus 6. The vehicle speed sensor 13 detects speed V of the vehicle, and outputs a signal indicating the detection value, to the control apparatus 6.

The control apparatus 6 controls the engine 1, based on the output signals of the sensors 10 to 13. As part of the engine control, the control apparatus 6, in the switching of the gear stage of the manual transmission 4, executes a speed control of the engine 1 for synchronizing the engine speed NE with the input shaft speed NI, that is, a gear-change revolution synchronization control.

That is, when the vehicle is running while the clutch 2 is engaged, the speed NE of the output shaft 1a of the engine 1 and the speed NI of the input shaft 4a of the manual transmission 4 coincide with each other, and the input shaft speed NI is changed by the selected gear stage of the multiple gear stages of the manual transmission 4, and is transmitted to the wheels.

When the driver steps on the clutch pedal 3 to open the clutch 2 and operates the shift lever 5 to change the gear stage of the manual transmission 4, the input shaft speed NI changes. When the input shaft speed NI changes, the engine speed NE and the input shaft speed NI diverge from each other. On this occasion, when the driver releases the clutch pedal 3 and engages the clutch 2 again in a state in which the engine speed NE and the input shaft speed NI have diverged greatly, a great shift shock is likely to be generated. Hence, in the case of detecting the change in the gear stage of the manual transmission 4, the control apparatus 6 performs the gear-change revolution synchronization control to reduce the shift shock.

For correctly performing the gear-change revolution synchronization control, it is necessary to accurately detect the change in the gear stage of the manual transmission 4 corresponding to the operation of the shift lever 5 by the driver. However, the vehicle in the embodiment is not provided with a shift position sensor to detect the operation position of the shift lever 5, and therefore, it is not possible to directly detect the change in the gear stage. Hence, in the embodiment, the change in the gear stage of the manual transmission 4 is detected based on the change in the input shaft speed NI associated with the change in the gear stage of the manual transmission 4 after the opening of the clutch 2.

However, when the clutch 2 is opened in gear change, a drive system of the vehicle is disconnected from the engine 1. As a reaction, torsional vibration is generated in the drive system, and by the torsional vibration, the input shaft speed NI rises and falls periodically. Therefore, simply by looking at the input shaft speed NI, it is sometimes impossible to distinguish between the torsional vibration of the drive system after the opening of the clutch 2 and the change in the input shaft speed NI due to the change in the gear stage of the manual transmission 4.

To cope with this, as shown in JP 2014-58909 A, there is known a technique of detecting the change in the gear stage using the following two values. The first value is a smoothed value NIs of the input shaft speed that is obtained by performing a first smoothing process for the detection value of the input shaft speed NI. The second value is a rough value of the input shaft speed that is either a value that is obtained by performing a second smoothing process, which has less smoothing degree than the first smoothing process, for the detection value of the input shaft speed NI, or the detection value of the input shaft speed NI. When the absolute value of the difference between the smoothed value NIs and the rough value has increased after the opening of the clutch 2, it is determined that the gear stage of the manual transmission 4 has changed.

In JP 2014-58909 A, a moderation process is used as the smoothing process for the calculation of the smoothed value NIs, and the detection value of the input shaft speed NI is used with no change as the rough value of the input shaft speed. In the moderation process, the difference between a value as the object of the moderation process and the current value is divided by a moderation coefficient, and the resulting value is added, so that the smoothed value NIs is updated. The smoothed value NIs is calculated based on the following Formula (1). NIs[n] = NIs[n - 1] + (NI - NIs[n - 1]) / TN ... (1) Here, NIs[n] represents a value of the smoothed value NIs that is calculated this time, and NIs[n - 1] represents a value of the smoothed value NIs that was calculated last time. Further, TN, which is a moderation coefficient, is a constant of 1 or more.

When the smoothed value NIs is obtained, the steep change in the input shaft speed NI is smoothed, and therefore, the smoothed value NIs is less likely to reflect the steep change in the input shaft speed NI associated with the change in the gear stage of the manual transmission 4. On the other hand, in the detection value of the input shaft speed NI to be used as the rough value, the steep change in the input shaft speed NI associated with the change in the gear stage of the manual transmission 4 appears with no change. Therefore, by looking at the deviation between the smoothed value NIs and the rough value, it is possible to accurately detect the change in the input shaft speed NI associated with the change in the gear shift of the manual transmission 4.

Furthermore, in JP 2014-58909 A, when the change in the gear stage of the manual transmission 4 is detected, a target engine speed NT having a value that depends on the input shaft speed NI of the manual transmission 4 is set, and the gear-change revolution synchronization control for synchronizing the engine speed NE with the input shaft speed NI of the manual transmission 4 based on the target engine speed NT is executed.

That is, at the time of the gear-change operation, when the accelerator pedal is released by the driver, both the engine speed NE and the input shaft speed NI decrease. When the clutch pedal is stepped on and the downshift of the gear stage of the manual transmission 4 is performed, the input shaft speed NI increases, and the engine speed NE becomes lower than the input shaft speed NI. On this occasion, if the alteration of the gear stage is determined based on the input shaft speed NI, the gear-change revolution synchronization control is started, and when the difference between the engine speed NE and the input shaft speed NI becomes less than a predetermined value, the gear-change revolution synchronization control is terminated.

However, in the above gear-change revolution synchronization control, if the release of the accelerator pedal is delayed when the driver steps on the clutch pedal and operates the shift lever, the engine speed NE becomes higher than the input shaft speed NI, because the engine speed NE increases before the alteration of the gear stage. When the downshift of the gear stage of the manual transmission 4 is performed in this state and the input shaft speed NI increases, the difference between the engine speed NE and the input shaft speed NI becomes less than the predetermined value, so that the gear-change revolution synchronization control is terminated. Thereafter, the amount of increase in the engine speed NE decreases, but the input shaft speed NI increases. Therefore, there is a high possibility that the engagement of the clutch is performed while the difference between the engine speed NE and the input shaft speed NI is large, and a great shift shock is likely to be generated.

Hence, in the embodiment, when the difference between the target engine speed NT and the engine speed NE is less than a predetermined value and the ratio between the input shaft speed NI and the speed V of the vehicle is stable, the engine torque demand is decreased. Even when the release of the accelerator pedal is delayed when the driver steps on the clutch pedal and operates the shift lever, it is possible to prevent a first mode from terminating, and it is possible to reduce the shift shock.

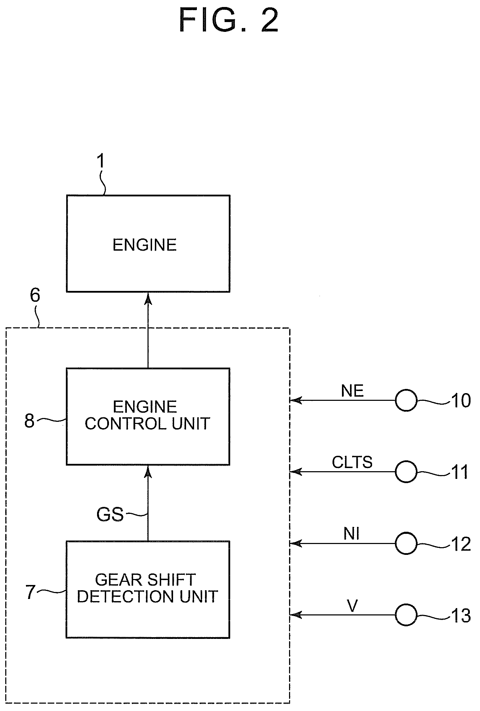

As shown in FIG. 2, the control apparatus 6 in the embodiment includes a gear shift detection unit 7 and an engine control unit 8. When the absolute value of the difference between the smoothed value NIs and the rough value has increased after the opening of the clutch 2, the gear shift detection unit 7 determines that the gear stage of the manual transmission 4 has changed, and outputs a gear shift detection signal GS indicating that the gear stage has changed, to the engine control unit 8. The gear shift detection signal GS, for example, is a pulse signal. Further, the control apparatus 6 receives the engine speed NE, the signal CLTS indicating the position of the clutch pedal, and the input shaft speed NI.

When the gear shift detection signal GS is output from the gear shift detection unit 7, the engine control unit 8 sequentially calculates the target engine speed NT having a value that depends on the input shaft speed NI, and executes the gear-change revolution synchronization control for synchronizing the engine speed NE with the input shaft speed NI based on the target engine speed NT. The target engine speed NT is nearly equal to the input shaft speed NI.

The engine control unit 8 has first and second modes in the gear-change revolution synchronization control. The first mode is a high-response mode of sequentially calculating an engine torque demand Dt, based on the difference between the target engine speed NT and the engine speed NE, and the engine speed NE, and then controlling the engine depending on the engine torque demand Dt. The second mode is an ending control mode of calculating an engine torque demand Dt that is less in absolute value than the engine torque demand Dt to be calculated in the first mode. In the second mode, the engine torque demand Dt is nearly zero.

The engine control unit 8 executes the first mode, in response to the detection of the change in the gear stage of the manual transmission 4 by the gear shift detection unit 7. Further, the engine control unit 8 stops the execution of the first mode and executes the second mode, when the absolute value of the difference between the target engine speed NT and the engine speed NE is less than a predetermined value and where the ratio between the input shaft speed NI and the vehicle speed V is constant for a previously decided time or more.

That is, when the change in the gear stage of the manual transmission 4 is detected, the engine control unit 8 executes the first mode, and thereby, generates a great engine torque demand Dt to quickly change the engine speed NE. On the other hand, when the engine speed NE has come close to the input shaft speed NI, the engine control unit 8 executes the second mode, and thereby, prevents the overshoot of the engine speed NE. Furthermore, the engine control unit 8 executes the second mode, only when the ratio between the input shaft speed NI and the vehicle speed V is stable, and thereby, prevents the gear-change revolution synchronization control from being falsely terminated.

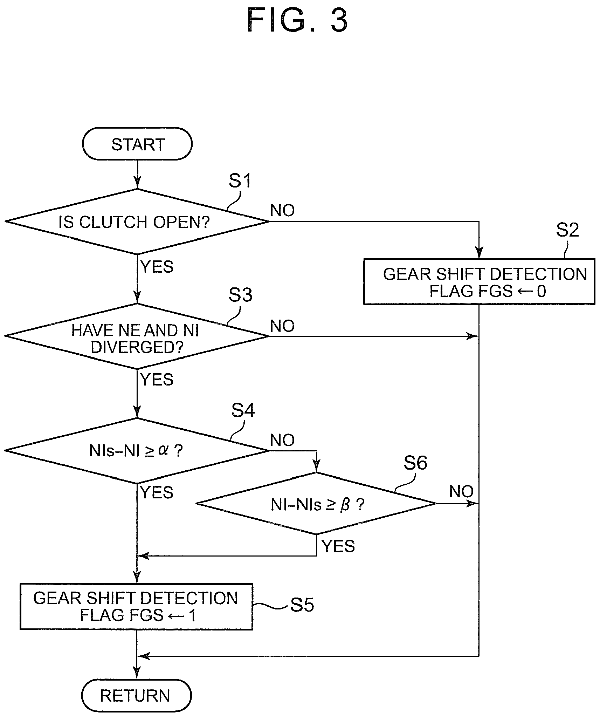

FIG. 3 is a flowchart showing the behavior of the gear shift detection unit 7. When altering the gear stage of the manual transmission 4, the driver steps on the clutch pedal 3 to open the clutch 2, before the alteration. Hence, in step S1, the gear shift detection unit 7 determines whether the clutch 2 is open. When the clutch 2 is not open, a gear shift detection flag FGS is set to 0 in step S2, and the detection behavior is terminated. When the clutch 2 is open, the gear shift detection unit 7 proceeds to step S3. When the gear shift detection flag FGS is set to 0 while the gear shift detection signal GS is output, the output of the gear shift detection signal GS is stopped.

The determination of whether the clutch 2 is open is performed based on the clutch position CLTS detected by the clutch position sensor 11. Specifically, when the clutch position CLTS is greater than the position at the time of the complete engagement of the clutch 2 by a specified value or more, it is determined that the clutch 2 is open. Otherwise, it is determined that the clutch 2 is not open.

When the driver steps on the clutch pedal 3 to open the clutch 2, the engine speed NE and the input shaft speed NI diverge from each other. Hence, in step S3, the gear shift detection unit 7 determines whether the engine speed NE and the input shaft speed NI have diverged. Specifically, the gear shift detection unit 7 checks whether a state in which the absolute value of the difference between the engine speed NE and the input shaft speed NI is specified value or more is being continued for a certain time or more. Here, in the case of determining that the engine speed NE and the input shaft speed NI have not diverged, the detection behavior is terminated, and in the case of determining that the NE and the NI have diverged, the gear shift detection unit 7 proceeds to step S4.

When the driver performs the downshift of the gear stage of the manual transmission 4 by the operation of the shift lever 5, the input shaft speed NI drastically increases, and when the driver performs the upshift of the gear stage of the manual transmission 4, the input shaft speed NI drastically decreases. The steep change in the input shaft speed NI at this time is smoothed by the smoothing process, and thereby, the reflection on the smoothed value NIs is delayed. Therefore, the deviation NI - NIs between the rough value (the detection value of the current input shaft speed NI) and the smoothed value NIs of the input shaft speed becomes large.

In step S4, the gear shift detection unit 7 determines whether the difference NIs - NI between the smoothed value NIs of the input shaft speed and the rough value (the detection value of the current input shaft speed NI) is equal to or greater than a specified determination value α for determining the upshift. The α is a positive value. In the case of determining that NIs - NI ≥ α holds, the gear shift detection unit 7, in step S5, sets the gear shift detection flag FGS to 1, and outputs the gear shift detection signal GS indicating that the upshift of the gear stage has been performed. In the case of NIs - NI≥ α, the upshift of the gear stage of the manual transmission 4 has been performed.

In the case of determining that NIs - NI ≥ α does not hold in step S4, the gear shift detection unit 7, in step S6, determines whether the difference NI - NIs between the rough value (the detection value of the current input shaft speed NI) and the smoothed value NIs of the input shaft speed is equal to or greater than a specified determination value β for determining the downshift. The β is a positive value. In the case of determining that NI - NIs ≥ β holds, the gear shift detection unit 7, in step S5, sets the gear shift detection flag FGS to 1, and outputs the gear shift detection signal GS indicating that the downshift of the gear stage has been performed. In the case of NI - NI ≥ β, the downshift of the gear stage of the manual transmission 4 has been performed. In the case of determining that NI - NIs ≥ β does not hold in step S6, the gear shift detection unit 7 finishes the detection behavior.

Here, α > β holds. The input shaft speed NI after the opening of the clutch 2 tends to decrease gradually because of the frictional resistance due to the agitation of oil within the manual transmission 4, and the like. For reflecting such a decrease on the determination, the setting of α > β is performed.

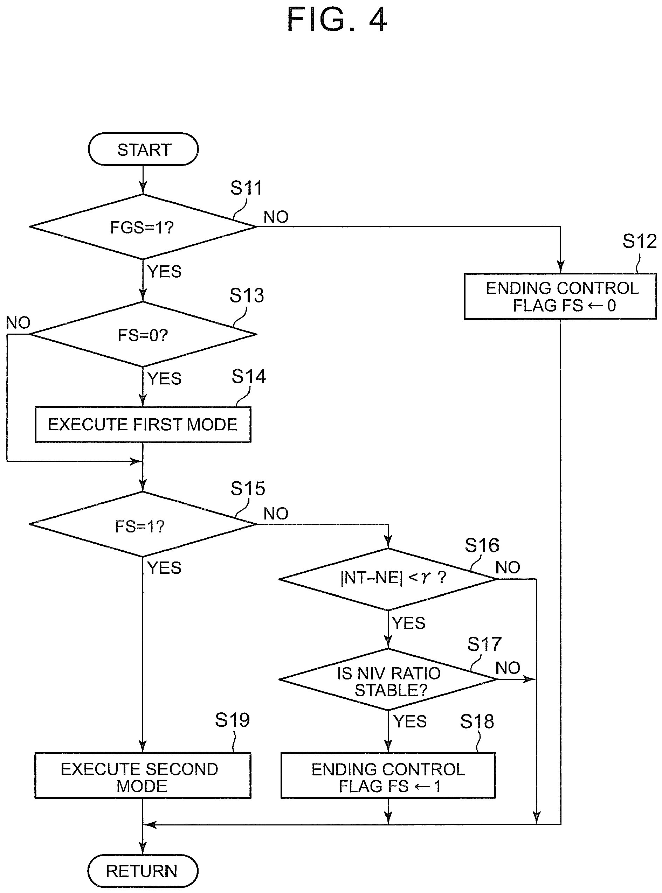

FIG. 4 is a flowchart showing the behavior of the engine control unit 8. In step S 11, the engine control unit 8 determines whether the gear shift detection flag FGS is 1. When FGS = 1 does not hold, the engine control unit 8, in step S12, sets an ending control flag FS to 0, and returns to step S11. In the case of FGS = 1 in step S11, the engine control unit 8 determines whether the ending control flag FS is 0, in step S 13. In the case of FS = 0, the engine control unit 8 executes the first mode in step S 14.

That is, in step S 14, the engine control unit 8 sequentially calculates the target engine speed NT having a value that depends on the input shaft speed NI, calculates the engine torque demand Dt based on the difference between the target engine speed NT and the current engine speed NE, and operates the engine 1 based on the engine torque demand Dt. Here, NT ≈ NI holds. The engine 1 outputs the torque having a value that depends on the engine torque demand Dt, to the output shaft 1a.

When FS = 0 does not hold in step S 13, the engine control unit 8 proceeds to step S 15. In step S 15, the engine control unit 8 determines whether the ending control flag FS is 1. In the case of determining that FS = 1 does not hold, the engine control unit 8 proceeds to step S16, and in the case of determining that FS = 1 holds, the engine control unit 8 proceeds to step S 19. In step S16, the engine control unit 8 determines whether the absolute value |NT - NE| of the difference between the calculated target engine speed NT and the current engine speed NE is less than a predetermined value γ for determining the finish of the gear-change revolution synchronization control. When |NT - NE| < γ does not hold, the engine control unit 8 returns to step S 11, and when |NT - NE| < γ holds, the engine control unit 8 proceeds to step S 17. When |NT - NE| < γ holds, the engine speed NE has come close to the target engine speed NT.

In step S 17, the engine control unit 8 determines whether the ratio NI / V between the input shaft speed NI and the vehicle speed V is stable. When the ratio NI / V is not stable, the engine control unit 8 returns to step S11, and when the ratio NI /V is stable, the engine control unit 8 proceeds to step S18. Whether the NIV ratio = NI / V is stable is determined, for example, by whether the change in the NIV ratio during a predetermined time period is in a predetermined range. When the NIV ratio is stable, the alteration of the gear stage of the manual transmission 4 is completed.

In step S18, the engine control unit 8 sets the ending control flag FS to 1, and returns to step S11. In the case of FS = 1 in step S 15, the engine control unit 8 executes the second mode in step S19. That is, in step S19, the engine control unit 8 sequentially calculates the target engine speed NT having a value that depends on the input shaft speed NI, calculates the engine torque demand Dt having a value that is less in absolute value than that in the first mode, based on the difference between the target engine speed NT and the engine speed NE, and operates the engine 1 based on the engine torque demand Dt. Thereby, it is possible to reduce the overshoot of the engine speed NE. When the engine speed NE becomes equal to the target engine speed NT, the engine control unit 8 finishes the execution of the second mode.

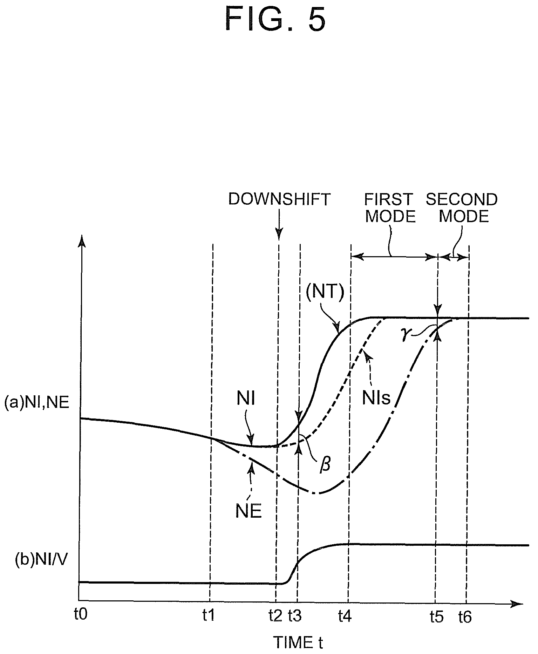

FIG. 5 is a timing chart exemplifying the gear-change revolution synchronization control for the vehicle. FIG. 5 shows a case where the accelerator pedal is released at an ordinary timing in the gear-change operation. At time t0, since the clutch 2 is engaged, the engine speed NE and the input shaft speed NI coincide with each other, and the NIV ratio is maintained in the predetermined range in which the NIV ratio is regarded as being stable. Further, the engine speed NE and the input shaft speed NI gradually decrease, because the driver has released the accelerator pedal for performing the gear-change operation. Here, in the embodiment, it is assumed that the warm-up of the manual transmission 4 is completed before the gear-change operation.

At time t1, the driver steps on the clutch pedal 3. Thereby, the clutch 2 is opened (S1), the engine speed NE decreases, and the engine speed NE and the input shaft speed NI diverge from each other (S3). At time t2, the driver performs the downshift of the gear stage of the manual transmission 4 by the operation of the shift lever 5. Thereby, the input shaft speed NI increases toward a value that is decided by the vehicle speed V and the change gear ratio after the alteration, and the NIV ratio also increases.

At time t3, the difference NI - NIs between the rough value and smoothed value of the input shaft speed becomes equal to or greater than the determination value β for determining the downshift (YES in S6). Thereby, the gear shift detection unit 7 outputs the gear shift detection signal GS indicating that the downshift of the gear stage has been performed (S5). In response to the gear shift detection signal GS, the engine control unit 8 executes the first mode (S11, S13, S14). That is, the engine control unit 8 sequentially calculates the target engine speed NT having a value that depends on the input shaft speed NI, calculates the engine torque demand Dt based on the difference between the target engine speed NT and the current engine speed NE, and operates the engine 1 based on the engine torque demand Dt. Thereby, the engine speed NE rapidly increases toward the input shaft speed NI.

At time t4, the input shaft speed NI reaches the value that is decided by the vehicle speed V and the change gear ratio after the alteration, and thereby, the NIV ratio becomes stable. At time t5, the absolute value |NT - NE| of the difference between the target engine speed NT (≈ NI) and the current engine speed NE becomes less than the predetermined value γ (YES in S16), and the change in the NIV ratio during the predetermined time period is in the predetermined range (YES in S 17). Therefore, the engine control unit 8 executes the second mode (S19).

That is, the engine control unit 8 sequentially calculates the target engine speed NT having a value that depends on the input shaft speed NI, calculates the engine torque demand Dt having a value less than that in the first mode, based on the difference between the target engine speed NT and the engine speed NE, and operates the engine 1 based on the engine torque demand Dt. Thereby, the engine speed NE slowly increases to come close to the input shaft speed NI (time t5 to time t6).

At time t6, the engine speed NE reaches the input shaft speed NI, and the gear-change revolution synchronization control is completed. Thereafter, when the driver releases the clutch pedal 3, the clutch 2 is smoothly engaged and the shift shock is reduced, because the engine speed NE and the input shaft speed NI coincide with each other.

FIG. 6 is a timing chart exemplifying the gear-change revolution synchronization control for the vehicle, and is a diagram contrasted with FIG. 5. FIG. 6 shows a case where the accelerator pedal is released at a delayed timing relative to an ordinary timing, in the gear-change operation. At time t0, since the clutch 2 is engaged, the engine speed NE and the input shaft speed NI coincide with each other, and the NIV ratio is maintained in the predetermined range in which the NIV ratio is regarded as being stable. It is assumed that the accelerator pedal is not completely released but the stepping is loosened. Therefore, the engine speed NE and the input shaft speed NI gradually decrease. It is assumed that the warm-up of the manual transmission 4 is completed.

At time t1, the driver steps on the clutch pedal 3. Thereby, the clutch 2 is opened (S1), and the load of the engine 1 is reduced so that the engine speed NE increases. Thereby, the engine speed NE and the input shaft speed NI diverge from each other (S3). At time t2, the driver performs the downshift of the gear stage of the manual transmission 4 by the operation of the shift lever 5. Thereby, the input shaft speed NI increases toward a value that is decided by the vehicle speed V and the change gear ratio after the alteration, and the NIV ratio also increases.

At time t3, the difference NI - NIs between the rough value and smoothed value of the input shaft speed becomes equal to or greater than the determination value β (YES in S6). Thereby, the gear shift detection unit 7 outputs the gear shift detection signal GS (S5). In response to the gear shift detection signal GS, the engine control unit 8 executes the first mode (S11, S13, S 14). That is, the engine control unit 8 sequentially calculates the target engine speed NT having a value that depends on the input shaft speed NI, calculates the engine torque demand Dt based on the difference between the target engine speed NT and the current engine speed NE, and operates the engine 1 based on the engine torque demand Dt. Thereby, the engine speed NE comes close to the input shaft speed NI.

At time t4, the target engine speed NT and the current engine speed NE coincide with each other, and |NT - NE| becomes less than the predetermined value γ (YES in S16). However, the change in the NIV ratio during the predetermined time period is not in the predetermined range (NO in S 17). Therefore, the engine control unit 8 continues the execution of the first mode (S 14).

At time t5, the input shaft speed NI reaches the value that is decided by the vehicle speed V and the change gear ratio after the alteration, and thereby, the NIV ratio becomes stable. At time t6, the absolute value |NT - NE| of the difference between the target engine speed NT and the current engine speed NE becomes less than the predetermined value γ (YES in S16), and the change in the NIV ratio during the predetermined time period is in the predetermined range (YES in S 17). Therefore, the engine control unit 8 executes the second mode (S 19).

That is, the engine control unit 8 sequentially calculates the target engine speed NT having a value that depends on the input shaft speed NI, calculates the engine torque demand Dt having a value less than that in the first mode, based on the difference between the target engine speed NT and the engine speed NE, and operates the engine 1 based on the engine torque demand Dt. Thereby, the engine speed NE slowly increases to come close to the input shaft speed NI.

At time t7, the engine speed NE reaches the input shaft speed NI, and the gear-change revolution synchronization control is completed. Thereafter, when the driver releases the clutch pedal 3, the clutch 2 is smoothly engaged and the shift shock is reduced, because the engine speed NE and the input shaft speed NI coincide with each other.

Thus, in the embodiment, when the difference between the target engine speed NT and the engine speed NE is less than the predetermined value γ and where the change in the NIV ratio during the predetermined time period is in the predetermined range, the engine torque demand Dt is decreased. Therefore, it is possible to prevent the gear-change revolution synchronization control at the time of the downshift of the manual transmission 4 from terminating before the input shaft speed NI of the manual transmission 4 increases to an input shaft speed NI for a gear stage after the gear change.

Here, in the embodiment, the engine control unit 8 terminates the first mode when the difference between the target engine speed NT and the engine speed NE is less than the predetermined value and where the change in the ratio between the input shaft speed NI and the vehicle speed V during the predetermined time period is in the predetermined range. However, the engine control unit 8 may finish the first mode, when a synchronization prediction time is shorter than a predetermined time that is set depending on the engine speed NE and where the change in the ratio between the input shaft speed NI and the vehicle speed V during the predetermined time period is in the predetermined range. Here, the synchronization prediction time is a time resulting from dividing the difference between the target engine speed NT and the engine speed NE by the differential (when the difference decreases) of the difference.

It should be understood that the embodiment disclosed herein is an example and is not limiting in all respects. It is intended that the scope of the invention is shown by not the above description but the claims, and includes all modifications in a meaning and scope equivalent to the claims.

## Claims

1. A control apparatus for a vehicle, the vehicle configured such that an output shaft of an engine (1) is connected with an input shaft of a manual transmission (4) through a clutch (2), the control apparatus comprising an electronic control unit (6) configured to
(a) detect a gear shift of the manual transmission (4), based on a change in input shaft speed of the manual transmission (4) during opening of the clutch (2),
(b) start a gear-change revolution synchronization control by which engine speed is controlled such that the engine speed becomes a target engine speed set depending on the input shaft speed, when the gear shift of the manual transmission (4) is detected, and
(c) finish the gear-change revolution synchronization control, after determining that a difference between the engine speed and the input shaft speed is less than a predetermined value and that a change in ratio between the input shaft speed and vehicle speed during a predetermined time period is within a predetermined range.

2. The control apparatus according to claim 1, wherein
the electronic control unit (6) is configured to
(d) execute a first mode, in response to detection of a change in a gear stage of the manual transmission (4), and
(e) stop the execution of the first mode and execute a second mode, after determining that the difference between the engine speed and the input shaft speed is less than the predetermined value, and that the change in the ratio between the input shaft speed and the vehicle speed during the predetermined time period is in the predetermined range,
the first mode being a mode of calculating a first engine torque demand value based on the difference between the target engine speed and the engine speed,
the second mode being a mode of calculating a second engine torque demand value based on the difference between the target engine speed and the engine speed, the second engine torque demand value being less in absolute value than the first engine torque demand value in the first mode.

3. The control apparatus according to claim 1 or claim 2, wherein
the electronic control unit (6) is configured to determine that a gear stage of the manual transmission (4) has changed, when the absolute value of a difference between a smoothed value and a rough value has increased after the opening of the clutch,
the smoothed value is a value that is obtained by a first smoothing process for a detection value of the input shaft speed, and
the rough value is a value that is obtained by a second smoothing process for the detection value of the input shaft speed, or the detection value of the input shaft speed, the smoothing degree in the second smoothing process being less than the smoothing degree in the first smoothing process.
